(19) Europäisches Patentamt
European Patent Office
Office européen des brevets

(11) **EP 4 091 704 A1**

(12) **EUROPEAN PATENT APPLICATION**
published in accordance with Art. 153(4) EPC

(43) Date of publication:
**23.11.2022 Bulletin 2022/47**

(21) Application number: **21741766.6**

(22) Date of filing: **14.01.2021**

(51) International Patent Classification (IPC):
**B01F 17/52** (2006.01)       **C08F 16/06** (2006.01)
**C08F 2/20** (2006.01)

(52) Cooperative Patent Classification (CPC):
**C08F 2/20; C08F 16/06; C09K 23/00**

(86) International application number:
**PCT/JP2021/001120**

(87) International publication number:
**WO 2021/145393 (22.07.2021 Gazette 2021/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.01.2020 JP 2020005372**

(71) Applicant: **Mitsubishi Chemical Corporation**
**Chiyoda-ku**
**Tokyo 100-8251 (JP)**

(72) Inventors:
• **FUJITA Tomoya**
  **Tokyo 100-8251 (JP)**
• **MURAMATSU Yusuke**
  **Tokyo 100-8251 (JP)**

(74) Representative: **Kuhnen & Wacker**
**Patent- und Rechtsanwaltsbüro PartG mbB**
**Prinz-Ludwig-Straße 40A**
**85354 Freising (DE)**

(54) **POLYVINYL ALCOHOL RESIN, PRODUCTION METHOD FOR POLYVINYL ALCOHOL RESIN, DISPERSANT, AND SUSPENSION POLYMERIZATION DISPERSANT**

(57)     The present invention relates to a polyvinyl alcohol-based resin, in which a block character (A) is less than 0.4, and an absorbance (B) at 320 nm in an ultraviolet absorption spectrum in the case of making the polyvinyl alcohol-based resin into a 0.1 wt% aqueous solution is 0.2 or more.

EP 4 091 704 A1

## Description

TECHNICAL FIELD

The present invention relates to a polyvinyl alcohol-based resin, more specifically to a polyvinyl alcohol-based resin suitable as a dispersing agent in suspension polymerization of a vinyl-based compound during the production of polyvinyl chloride, a method for producing the polyvinyl alcohol-based resin, a dispersing agent, and a dispersing agent for suspension polymerization.

BACKGROUND ART

A polyvinyl alcohol-based resin (hereinafter, "polyvinyl alcohol" may be abbreviated as "PVA") is obtained by saponifying a polymer obtained by polymerizing a vinyl ester-based monomer such as vinyl acetate, and has a vinyl alcohol structural unit corresponding to a degree of saponification and a vinyl ester structural unit remaining without saponification. Further, the PVA-based resin has a structure that is subjected to dehydration and acetic acid elimination by a heat treatment and has a double bond in the main chain. The PVA-based resin having such a structure is used for dispersion stabilizers for suspension, water retention materials, and the like during the production of polyvinyl chloride. In addition, it is also known that the strength can be improved by subjecting a film or fiber made of the PVA-based resin to a heat treatment.

On the other hand, various heat-treated PVA-based resins have been studied as dispersing agents for suspension polymerization in the production of polyvinyl chloride. For example, a polyvinyl alcohol-based resin having a carbonyl group in the molecule and containing a salt and a hydroxide of a divalent or trivalent metal has been proposed (see, for example, Patent Literature 1). In addition, a PVA-based polymer has been proposed, in which an absorbance (a) at 280 nm according to an ultraviolet absorption spectrum of an aqueous solution having a concentration of 0.1 wt% is larger than 0.1, an absorbance (b) at 320 nm according to the ultraviolet absorption spectrum of the aqueous solution is 0.03 or more, absorbance (b)/absorbance (a) is less than 0.3, and a block character of residual acetic acid groups is 0.4 or more (see, for example, Patent Literature 2).

Since the double bond in the PVA-based resin acts as a starting point for adsorption to a vinyl chloride monomer and subsequent graft reaction during suspension polymerization of the vinyl chloride monomer, it is generally known that the more the double bond is, the better the polymerization stability is.

However, in order to obtain a PVA-based resin having a double bond, as described in Patent Literatures 1 and 2, it is necessary to perform a heat treatment at about 150°C for 5 to 6 hours, which causes a problem that the production cost is high.

In order to solve the above problems, it has been proposed to perform a heat treatment using a twin-screw extruder (for example, Patent Literature 3). The PVA-based resin described in Patent Literature 3 is a polyvinyl alcohol-based resin having a carbonyl group in the molecule and having a block character of a residual fatty acid ester group of 0.5 or more, and each absorbance at 215 nm, 280 nm, and 320 nm according to the ultraviolet absorption spectrum of a 0.1 wt% aqueous solution of the polyvinyl alcohol resin is 0.1 or more, and the ratio of the absorbance at 320 nm/ absorbance at 280 nm is 0.3 or more.

CITATION LIST

PATENT LITERATURE

Patent Literature 1: JP-A-H08-269112
Patent Literature 2: JP-A-H08-283313
Patent Literature 3: JP-A-2004-250695

SUMMARY OF INVENTION

TECHNICAL PROBLEM

However, the above PVA-based resin is obtained by being subjected to a strong heat treatment in order to improve the polymerization stability. In the PVA-based resin subjected to a strong heat treatment, since the block character of the obtained PVA-based resin is high, the dispersibility deteriorates. When the above PVA-based resin is used as a dispersing agent for suspension polymerization, it is difficult to obtain a porous vinyl chloride resin.

Therefore, in order to enhance the polymerization stability of a suspended polymer (such as polyvinyl chloride) during polymerization, an object of the present invention is to provide a PVA-based resin having a high content of a double bond in the resin and excellent dispersibility, and to provide a dispersing agent using the PVA-based resin and a dispersing agent for suspension polymerization using the PVA-based resin for use in the production of polyvinyl chloride.

SOLUTION TO PROBLEM

As a result of diligent studies to solve the above problems, the present inventors have found that a PVA-based resin having a high content of the double bond in the resin and a small block character value can be obtained. Thus, the present invention has been completed.

That is, the present invention relates to the following [1] to [5].

[1] A polyvinyl alcohol-based resin, in which a block character (A) is less than 0.4, and an absorbance (B) at 320 nm in an ultraviolet absorption spectrum in the case of making the polyvinyl alcohol-based resin into a 0.1 wt% aqueous solution is 0.2 or more.
[2] The polyvinyl alcohol-based resin according to [1], in which a ratio (B/A) of the absorbance (B) at 320 nm in the ultraviolet absorption spectrum in the case of making the polyvinyl alcohol-based resin into a 0.1 wt% aqueous solution with respect to the block character (A) is 0.6 or more.
[3] A dispersing agent including the polyvinyl alcohol-based resin according to [1] or [2].
[4] A dispersing agent for suspension polymerization including the polyvinyl alcohol-based resin according to [1] or [2].
[5] A method for producing the polyvinyl alcohol-based resin according to claim [1] or [2], including polymerizing a monomer composition containing a vinyl ester-based monomer while introducing an oxygen-containing gas to obtain a vinyl ester-based polymer.

ADVANTAGEOUS EFFECTS OF INVENTION

According to the present invention, a PVA-based resin having a high content of a double bond in the resin and a small block character value can be obtained. Therefore, when such a PVA-based resin is used as a dispersing agent for suspension polymerization, it is presumed that the polymerization stability of the suspended polymer (such as polyvinyl chloride) can be improved, and the dispersion stability can also be improved.

DESCRIPTION OF EMBODIMENTS

Hereinafter, a polyvinyl alcohol-based resin of the present invention will be described in detail, but these show examples of desirable embodiments, and the present invention is not specified in these contents. In the present description, the weight-based ratio (percentage or part) is the same as the mass-based ratio (percentage or part).

[Polyvinyl Alcohol-based Resin]

In the polyvinyl alcohol-based resin of the present invention (hereinafter referred to as a PVA-based resin), a block character (A) is less than 0.4, and an absorbance (B) at 320 nm in an ultraviolet absorption spectrum in the case of making the polyvinyl alcohol-based resin into a 0.1 wt% aqueous solution is 0.2 or more.

In the PVA-based resin of the present invention, the block character (A) is less than 0.4, preferably 0.25 or more and less than 0.4, more preferably 0.3 or more and less than 0.4, and still more preferably 0.35 or more and less than 0.4. When the block character (A) is less than 0.4, the dispersion stability of the PVA-based resin is improved. When the value of the block character (A) is too large, in the case of using the PVA-based resin as a dispersing agent for suspension polymerization, the plasticizer absorbability of a vinyl-based resin obtained by suspension polymerization tends to decrease or the particle size distribution thereof tends to be wide. When the value of (A) is too small, the polymerization stability tends to deteriorate.

Such a block character (A) is obtained based on a absorption intensity ratio of absorption [absorption of (OH, OH) dyad = 43.5 ppm to 46 ppm, absorption of (OH, OR) dyad = 41.0 ppm to 43.5 ppm, and absorption of (OR, OR) dyad = 38 ppm to 40.5 ppm, where R represents an acetyl group ($CH_3CO$-)] based on a methylene carbon moiety found in the range of 38 ppm to 49 ppm in $^{13}C$-NMR measurement using a 3-(trimethylsilyl)propionic-2,2,3,3-$d_4$ acid sodium salt as an internal standard material, and is thus a value calculated according to the following equation.

$$\text{Block character (A)} = (A) = (OH, OR)/2(OH)(OR)$$

((OH, OR), (OH), and (OR) are all calculated by mole fraction. In addition, (OH) is the degree of saponification (mole fraction) calculated by the integral ratio of $^{13}$C-NMR For example, when vinyl acetate is used as the fatty acid vinyl, (OR) indicates the mole fraction of the acetoxy group at this time.)

The block character indicates the degree of the average chain length of the fatty acid ester unit in the polyvinyl alcohol-based resin. The larger the value, the shorter the average chain length of the residual fatty acid ester blocks (the higher the randomness of the fatty acid ester units). The block character and a measurement method thereof are described in detail in Poval (Publisher: Polymer Publications, 1984) and Macromolecules, 10, 532 (1977).

In the case of making the polyvinyl alcohol-based resin into a 0.1 wt% aqueous solution, the absorbance (B) at 320 nm in the ultraviolet absorption spectrum is 0.2 or more, preferably 0.25 or more, and more preferably 0.30 or more. When the value of the absorbance (B) is equal to or higher than the above lower limit, the amount of double bonds in the PVA-based resin tends to be sufficient, and the polymerization stability when the PVA-based resin is used as a dispersing agent for suspension polymerization is improved. The upper limit is not particularly limited, and is about 1.5 from the viewpoint of manufacturability. When the value of the absorbance (B) is too small, since the formation of double bonds in the PVA-based resin is small, the surface activity tends to decrease when the PVA-based resin is used as various dispersing agents. In addition, when the value of the absorbance (B) is too large, in the case of using the PVA-based resin as a dispersing agent for suspension polymerization, the average particle size of the obtained polyvinyl chloride or the like becomes too small, and the handleability tends to deteriorate.

In the present invention, the ratio (B/A) of the absorbance (B) at 320 nm in the ultraviolet absorption spectrum in the case of making the polyvinyl alcohol-based resin into a 0.1 wt% aqueous solution with respect to the block character (A) is preferably 0.5 or more, and more preferably 0.6 or more. The ratio (B/A) being equal to or higher than the above lower limit is preferred since the polymerization stability is improved in the case of using the PVA-based resin as a dispersing agent for suspension polymerization. When the ratio (B/A) is too small, in the case of using the PVA-based resin as a dispersing agent for suspension polymerization such as vinyl chloride, the surface activity tends to be low and the suspension polymerization stability tends to be lowered. The upper limit of the ratio (B/A) is not particularly limited, and is about 3 from the viewpoint of productivity.

Such an absorbance is a value obtained by measuring the absorbance of the 0.1 wt% aqueous solution of the PVA-based resin using an ultraviolet-visible near-infrared spectrophotometer (for example, "V-560" (trade name) manufactured by JASCO Corporation). The absorbance is measured using a sample container (cell) having an optical path length of 1 cm.

Generally, the PVA-based resin is a resin obtained by saponifying a homopolymer of a vinyl ester-based monomer or a copolymer of a vinyl ester-based monomer and another monomer (hereinafter, may be referred to as "vinyl ester-based polymer") using an alkali catalyst or the like.

The degree of saponification of the PVA-based resin of the present invention is preferably 60 mol% or more, more preferably 65 mol% to 98 mol%, still more preferably 67 mol% to 90 mol%, even more preferably 69 mol% to 88 mol%, and particularly preferably 70 mol% to 82%. Because of having an acetic acid group (hydrophobic group) in addition to a hydroxy group (hydrophilic group) in the molecule, the PVA-based resin of the present invention has surface activity and can be uniformly dispersed in a dispersion medium. When the degree of saponification is too low, the water dispersibility tends to decrease. Therefore, the degree of saponification is preferably 60 mol% or more. The degree of saponification is a value measured in accordance with JIS K 6726:1994.

The average polymerization degree of the PVA-based resin of the present invention is preferably 100 to 4000, more preferably 200 to 3000, and still more preferably 200 to 2000. When the average polymerization degree is too low, the surface activity tends to be low, and in the case of using the PVA-based resin as a dispersing agent for suspension polymerization for vinyl chloride, aggregation is likely to occur during suspension polymerization. On the other hand, when the average polymerization degree is too high, the viscosity of the aqueous solution of the PVA-based resin tends to increase, and the handleability tends to be lowered. The average polymerization degree can be measured in accordance with JIS K 6726:1994.

During the production, for example, a PVA-based resin subjected to a heat treatment to ensure a sufficient amount of double bonds in the resin is prone to yellowing, and in the case of using such a PVA-based resin as a dispersing agent for suspension polymerization, the hue of the obtained resin such as vinyl chloride may deteriorate. On the other hand, in the case of obtaining the PVA-based resin of the present invention, the content of the double bond can be relatively increased without a heat treatment. Therefore, the PVA-based resin of the present invention tends to have a relatively small YI value and is excellent in preventing yellowing.

[Method for Producing Polyvinyl Alcohol-based Resin]

In the PVA-based resin of the present invention, as described above, the block character (A) is less than 0.4, and the absorbance (B) at 320 nm in the ultraviolet absorption spectrum in the case of making the polyvinyl alcohol-based resin into a 0.1 wt% aqueous solution is 0.2 or more.

First, a method of obtaining a PVA-based resin having a block character (A) of less than 0.4 and an absorbance (B) at 320 nm of 0.2 or more in the ultraviolet absorption spectrum in the case of making the polyvinyl alcohol-based resin into a 0.1 wt% aqueous solution will be described. Examples of such a method include the following methods (i) to (iv).

(i) A method of radically polymerizing a monomer composition containing a vinyl ester-based monomer under conditions containing oxygen and subjecting the obtained vinyl ester-based polymer to a saponification reaction.
(ii) A method of radically polymerizing a monomer composition containing a vinyl ester-based monomer in the coexistence of oxygen and aldehyde and subjecting the obtained vinyl ester-based polymer to a saponification reaction.
(iii) A method of reacetic acidizing a vinyl alcohol-based resin having a double bond and subjecting the obtained vinyl ester-based polymer to a saponification reaction.
(iv) A method of radically polymerizing a monomer composition containing a vinyl ester-based monomer in the coexistence of formaldehyde and subjecting the obtained vinyl ester-based polymer to a saponification reaction.

Among these, the above method (i) or (ii) is preferred from the viewpoint of productivity.

Hereinafter, the method for producing the PVA-based resin of the present invention will be described by taking the method (i) above as an example.

The monomer composition as a starting material contains a vinyl ester-based monomer. Examples of the vinyl ester-based monomer include vinyl formate, vinyl acetate, vinyl propionate, vinyl butyrate, vinyl caprate, vinyl laurate, vinyl palmitate, vinyl stearate, and other linear or branched saturated fatty acid vinyl esters. From the viewpoint of practice, as the vinyl ester-based monomer, vinyl acetate is preferably used. For example, vinyl acetate alone or a combination of vinyl acetate and a fatty acid vinyl ester compound other than vinyl acetate is preferably used.

There is no particular limitation on the polymerization of the monomer composition containing a vinyl ester-based monomer, and a known polymerization method can be optionally used. For example, solution polymerization is carried out using an alcohol having 1 to 3 carbon atoms as a solvent, such as methanol, ethanol or isopropyl alcohol. Of course, bulk polymerization, emulsion polymerization, and suspension polymerization can also be used. In such solution polymerization, any means such as split charging and batch charging may be used as the method for charging the vinyl ester-based monomer. The polymerization reaction is carried out using known radical polymerization catalysts such as azobisisobutyronitrile, acetyl peroxide, benzoyl peroxide, lauroyl peroxide, azobisdimethylvaleronitrile and azobismethoxyvaleronitrile. The polymerization reaction temperature is selected from the range of about 40°C to the boiling point.

Polymerizing the monomer composition containing the vinyl ester-based monomer to obtain the vinyl ester-based polymer is preferably carried out under conditions containing oxygen. Specifically, it is preferable to obtain the vinyl ester-based polymer by polymerizing a monomer composition containing a vinyl ester-based monomer while introducing an oxygen-containing gas or by introducing an oxygen-containing gas before polymerization, and it is more preferable to obtain the vinyl ester-based polymer by polymerizing a monomer composition containing a vinyl ester-based monomer while introducing an oxygen-containing gas. The method of introducing the oxygen-containing gas is not particularly limited, and for example, introduction by blowing (bubbling) is preferred. By performing polymerization while introducing the oxygen-containing gas or by introducing the oxygen-containing gas before polymerization, it is easy to obtain a PVA-based resin having a relatively large content of the double bond even without undergoing a heat treatment. The reason is considered to be that oxygen reacts with the polymerization growth end of the PVA-based resin to form an aldehyde group, and then double bond introduction occurs by an acetic acid elimination reaction.

That is, by carrying out the polymerization by such a method, a PVA-based resin having a relatively large absorbance (B) and a relatively small value of block character (A) can be obtained. Further, since the content of the double bond can be relatively large even without undergoing a heat treatment, yellowing of the obtained PVA-based resin and yellowing of the resin obtained in the case of using the PVA-based resin as a dispersing agent for suspension polymerization are less likely to occur. Therefore, according to the method for producing the PVA-based resin of the present invention, when used as a dispersing agent for suspension polymerization, a PVA-based resin having excellent polymerization stability and dispersion stability and excellent yellowing prevention can be obtained.

The method of introducing the oxygen-containing gas can be optionally selected, and it is preferable to introduce the gas diluted with an inert gas such as nitrogen, argon or helium such that the oxygen concentration is 1 mass% to 9 mass%. When the oxygen concentration is less than 1 mass%, a sufficient amount of oxygen is not introduced into the reaction field, and it tends to be difficult to obtain PVA having the desired formyl end. When the oxygen concentration is more than 9 mass%, the explosive limit oxygen concentration of vinyl acetate (9 mass% to 10 mass%) is reached or exceeded, so that safety concerns are likely to occur.

The method of introducing the oxygen-containing gas into the reaction system can be optionally selected. The method of polymerization using a polymerization solution obtained by directly bubbling a polymerization solution or polymerization while directly bubbling a polymerization solution can increase the contact area between the inside of the reaction system and oxygen, so that the introduction efficiency is good.

The amount of oxygen to be introduced can be optionally selected, and the amount of oxygen supplied per minute with respect to the amount of the monomer is preferably 25 mL or less. Being more than 25 mL is not preferred from the viewpoint of productivity. Since the reaction efficiency tends to deteriorate when the amount of oxygen is 0.1 mL or less, the supply amount of oxygen is preferably 0.1 mL or more. When the oxygen-containing gas is introduced before polymerization, the introduction time of the oxygen-containing gas depends on the size of the production equipment and the flow rate of the gas, and is preferably 0 hours to 3 hours, and preferably 15 minutes to 1 hour.

It is preferable to use a chain transfer agent in the polymerization of the monomer composition. Examples of the chain transfer agent include: alcohols such as ethanol, methanol, and 1-propanol; aldehydes such as formaldehyde, acetaldehyde, propionaldehyde, butyraldehyde, and benzaldehyde; and ketones such as acetone, methyl ethyl ketone, hexanone, and cyclohexanone. The above may be used alone or in combination of two or more thereof. Among these, alcohols and/or aldehydes are preferably used, with methanol and acetaldehyde being particularly preferred, from the viewpoint that the post-polymerization structure is similar to the final product.

The amount of the chain transfer agent to be added varies slightly depending on the chain transfer constant of the chain transfer agent to be added, the polymerization degree of the target PVA-based resin, and the like, and any amount can be added. The amount of the chain transfer agent to be added is generally preferably 0.1 wt% to 200 wt%, more preferably 0.5 wt% to 150 wt%, still more preferably 1.0 wt% to 130 wt%, and particularly preferably 1.3 wt% to 100 wt%, with respect to the vinyl ester-based monomer. The chain transfer agent may be charged at the initial batch or during the polymerization reaction. By charging the chain transfer agent by any method, the molecular weight distribution of the PVA-based resin can be controlled.

As the monomer composition, the vinyl ester-based monomer may be used alone, and if necessary, the vinyl ester-based monomer may be combined with a monomer polymerizable with the vinyl ester-based monomer. That is, the PVA-based resin of the present invention may be a modified PVA-based resin obtained by using a vinyl ester-based polymer obtained by copolymerizing a vinyl ester-based monomer and a monomer polymerizable with the vinyl ester-based monomer. Examples of the monomer polymerizable with the vinyl ester-based monomer include: monomers having a vinyl group and an epoxy group, such as glycidyl (meth)acrylate, glycidyl (meth)allyl ether, 3,4-epoxycyclohexyl (meth)acrylate, and allyl glycidyl ether; monomers having 2 or more allyl groups, such as triallyloxyethylene, diallyl maleate, triallyl cyanurate, triallyl isocyanurate, tetraallyloxyethane, and diallyl phthalate; allyl ester monomers such as allyl acetate, vinyl acetoacetic ester, acetoacetic acid allyl ester, and diacetoacetic acid allyl ester; acetoacetoxyalkyl (meth)acrylates such as acetoacetoxyethyl (meth)acrylate and acetoacetoxypropyl (meth)acrylate; acetacetoxyalkyl crotonates such as acetoacetoxyethyl crotonate and acetoacetoxypropyl crotonate; 2-cyanoacetoacetoxyethyl (meth)acrylate; divinylbenzene; alkylene glycol (meth)acrylates such as ethylene glycol di(meth)acrylate, 1,2-propylene glycol di(meth)acrylate, 1,3-propylene glycol di(meth)acrylate, 1,4-butanediol di(meth)acrylate, 1,6-hexanediol di(meth)acrylate, and neopentyl glycol di(meth)acrylate; trimethylolpropane tri(meth)acrylate; allyl (meth)acrylate; hydroxyalkyl (meth)acrylates (the alkyl moiety is a C1-C10 alkyl group, preferably a C1-C6 alkyl group) such as 2-hydroxyethyl (meth)acrylate, hydroxypropyl (meth)acrylate, and 4-hydroxybutyl (meth)acrylate; nitrile-based monomers such as (meta)acrylonitrile; styrene-based monomers such as styrene and $\alpha$-methylstyrene; olefin such as ethylene, propylene, 1-butene, and isobutene; halogenated olefins such as vinyl chloride, vinylidene chloride, vinyl fluoride, and vinylidene fluoride; olefin-based monomers such as ethylene sulfonic acid; diene-based monomers such as butadiene-1,3, 2-methylbutadiene, 1,3 or 2,3-dimethylbutadiene-1,3, 2-chlorobutadiene-1,3; hydroxy group-containing $\alpha$-olefins such as 3-butene-1-ol, 4-pentene-1-ol, 5-hexene-1,2-diol, and glycerin monoallyl ether, and derivatives such as acylated products thereof; hydroxymethylvinylidene diacetates such as 1,3-diacetoxy-2-methylenepropane, 1,3-dipropionyloxy-2-methylenepropane, and 1,3-dibutyronyloxy-2-methylenepropane; unsaturated acids such as itaconic acid, maleic acid, acrylic acid, and salts or mono or dialkyl esters thereof; nitriles such as acrylonitrile; amides such as methacrylamide and diacetone acrylamide; compounds such as olefin sulfonic acid such as ethylene sulfonic acid, allyl sulfonic acid, methallyl sulfonic acid, 2-acrylamide-2-methylpropane sulfonic acid (AMPS) or salts thereof; vinyl alkyl dialkoxysilanes such as vinyltriethoxysilane, vinyltrimethoxysilane, vinyltripropoxysilane, vinyltributoxysilane, vinylmethyldimethoxysilane, and vinylmethyldiethoxysilane; $\gamma$-(meth)acryloxypropyltrialkoxysilanes such as $\gamma$-(meth)acryloxypropyltrimethoxysilane and $\gamma$-(meth)acryloxypropyltriethoxysilane; $\gamma$-(meth)acryloxypropylalkyldialkoxysilanes such as $\gamma$-(meth)acryloxypropylmethyldimethoxysilane and $\gamma$-(meth)acryloxypropylmethyldiethoxysilane; vinyltris($\beta$-methoxyethoxy)silane; and hydroxymethylvinylidene diacetate.

Specific example of the hydroxymethylvinylidene diacetate include 1,3-diacetoxy-2-methylenepropane, 1,3-dipropionyloxy-2-methylenepropane, and 1,3-dibutyronyloxy-2-methylenepropane. In addition, examples thereof include diol-containing compounds such as 3,4-dihydroxy-1-butene, 3,4-diacyloxy-1-butene, 3-acyloxy-4-hydroxy-1-butene, 4-acyloxy-3-hydroxy-1-butene, 3,4-diacyloxy-2-methyl-1-butene, 4,5-dihydroxy-1-pentene, 4,5-diacyloxy-1-pentene, 4,5-dihydroxy-3-methyl-1-pentene, 4,5-diacyloxy-3-methyl-1-pentene, 5,6-dihydroxy-1-hexene, 5,6-diacyloxy-1-hexene, glycerin monoallyl ether, 2,3-diacetoxy-1-allyloxypropane, 2-acetoxy-1-allyloxy-3-hydroxypropane, 3-acetoxy-1-allyloxy-2-hydroxypropane, glycerin monovinyl ether, glycerin monoisopropenyl ether, vinyl ethylene carbonate, and 2,2-dimethyl-4-vinyl-1,3-dioxolane. These monomers may be used alone or in combination of two or more thereof.

The term "(meta)acrylate" means "acrylate and/or methacrylate", and the same applies to "(meth)allyl" and "(meth)acrylo".

The content of the monomer polymerizable with the vinyl ester-based monomer is preferably 20 mol% or less, and more preferably 10 mol% or less in the monomer composition.

Saponification can be carried out by a known method, and generally, the vinyl ester-based polymer is dissolved in an alcohol and an ester and saponification is carried out in the presence of an alkali catalyst or an acid catalyst. Examples of the alcohol include alcohols having 1 to 6 carbon atoms such as methanol, ethanol and butanol. Examples of the ester include esters having 3 to 8 carbon atoms such as methyl acetate, ethyl acetate and butyl acetate. The alcohol and the ester used during saponification can be used in any combination, and from the viewpoint of productivity, methanol and methyl acetate are preferably used.

The concentration of the vinyl ester-based polymer in the alcohol and the ester is preferably the range of 1 wt% to 70 wt% from the viewpoint of solubility.

As the alkali catalyst, for example, hydroxides of alkali metals such as sodium hydroxide, potassium hydroxide, sodium methylate, sodium ethylate, and potassium methylate, and alkaline catalysts such as alcoholate can be used. As the acid catalyst, for example, an aqueous solution of an inorganic acid such as hydrochloric acid or sulfuric acid, or an organic acid such as p-toluenesulfonic acid can be used. The amount of such a catalyst used is preferably 1 to 100 mmol equivalent, more preferably 1 to 40 mmol equivalent, and still more preferably 1 to 30 mmol equivalent with respect to the vinyl ester-based monomer. When the amount of the catalyst used is too small, it tends to be difficult to proceed with saponification to the desired degree of saponification. Further, even if the amount of the catalyst used is too large, it is difficult to see an improvement in the reactivity of saponification, which is not preferred.

The reaction temperature during the saponification is not particularly limited, and is preferably, for example, 10°C to 70°C, and more preferably 20°C to 50°C.

The PVA-based resin of the present invention may be a modified PVA-based resin obtained by post-modifying the obtained PVA-based resin. Examples of a method of producing the modified PVA-based resin by post-modification include a method of acetoacetic esterification, acetalization, urethanization, etherification, grafting, phosphate esterification, and oxyalkylenation of the PVA-based resin.

As described above, the PVA-based resin obtained by saponification is then dried, and such a PVA-based resin obtained by saponification may contain at least one of a salt and a hydroxide of a divalent or trivalent metal.

Examples of the divalent to trivalent metal include magnesium, calcium, zinc, and aluminum. Specific examples of the salt and the hydroxide of these metals include magnesium acetate tetrahydrate, calcium acetate, calcium propionate, magnesium butyrate, magnesium carbonate, magnesium hydroxide, zinc acetate, and aluminum hydroxide. The above may be used alone or in combination of two or more thereof. Among these, magnesium acetate tetrahydrate and calcium acetate are preferred because of being soluble in water and/or methanol and being easy to handle industrially.

The method of containing the salt and/or the hydroxide of the divalent or trivalent metal is not limited. For example, the above compound may be added directly to a paste before saponification, a slurry after saponification, or the like. For example, a method of dissolving the above compound in alcohols such as methanol, ethanol, and propanol, or water in the form of a solution having a concentration of about 3 wt% to 15 wt%, adding the solution to the slurry of the PVA-based resin after saponification, and distributing to the PVA-based resin is preferred.

The PVA-based resin obtained as described above is dried after saponification to become a powdery PVA-based resin. Examples of the drying method include vacuum drying, normal pressure drying, and hot air drying. The drying time is generally 10 minutes to 20 hours, and preferably 1 hour to 15 hours. The drying temperature is generally 40°C to 140°C, preferably 40°C to 120°C, and particularly preferably 50°C or higher and lower than 100°C.

[Use]

Since the PVA-based resin of the present invention obtained as described above is prevented in coloring (yellowing), it has an excellent hue and can be suitably used for various uses. Uses of the PVA-based resin of the present invention include, for example, the following.

(1) Molded product-related: fibers, films, sheets, pipes, tubes, leak-proof films, provisional films, for chemical lace, water-soluble fibers, etc.

(2) Adhesive-related: adhesives for wood, paper, aluminum foil, and plastics, adhesives, re-wetting agents, binders for non-woven fabrics, binders for various building materials such as gypsum board and fiber board, binders for various powder granulation, additives for cement and mortar, hot melt adhesives, pressure sensitive adhesives, adhesives for anionic paints, etc.

(3) Coating agent-related: clear paper coating agents, paper pigment coating agents, paper internal sizing agents, textile sizing agents, warp glue, fiber processing agents, leather finish, paints, anti-fogging agents, metal corrosion inhibitors, galvanizing brighteners, antistatic agents, conductive agents, provisional paints, etc.

(4) Blending agents for hydrophobic resins-related: antistatic agents for hydrophobic resins and hydrophilicity-imparting agents; additives for composite fibers, films and other molded articles; etc.

(5) Dispersing agent-related: dispersing agents for color developer of coating liquid for heat-sensitive color-developing layer; pigment dispersion stabilizer for paints, India inks, water-based colors, adhesives, etc.; dispersion stabilizer for suspension polymerization of various vinyl compounds such as vinyl chloride, vinylidene chloride, styrene, (meth)acrylate, and vinyl acetate; etc.

(6) Emulsification dispersion stabilizer-related: emulsifiers for emulsion polymerization of various acrylic monomers, ethylenically unsaturated compounds, and butadiene compounds; post-emulsifiers of hydrophobic resins such as polyolefins and polyester resins, epoxy resins, paraffins, bitumen; etc.

(7) Thickener-related: thickeners for various aqueous solutions, emulsions and petroleum drilling fluids, etc.

(8) Coagulant-related: coagulant for suspensions and dissolved substances in water, drainage agent for pulp, slurry, etc.

(9) Exchange resin or the like-related: ion exchange resin, chelate exchange resin, ion exchange membrane, etc.

(10) Others: soil conditioners, photosensitive agents, photosensitive resist resins, etc.

Among the above, in particular, the PVA-based resin of the present invention is useful as a dispersion stabilizer for suspension polymerization of various vinyl compounds such as vinyl acetate and vinyl chloride, and is particularly useful as a dispersion stabilizer for suspension polymerization of vinyl chloride-based compounds.

[Dispersing agent]

When the PVA-based resin of the present invention is used as a dispersing agent, examples of an object to be dispersed include polymerizable monomers and powders. In particular, it is preferable that the PVA-based resin of the present invention disperses a polymerizable monomer as the object to be dispersed and is used as a dispersing agent for suspension polymerization. Examples of the polymerizable monomer as a target of suspension polymerization include vinyl chloride, vinylidene halide, vinyl ether, vinyl acetate, vinyl benzoate, acrylic acid, methacrylic acid, maleic acid or an anhydride thereof, ethylene, propylene, and styrene. Among these, the PVA-based resin of the present invention is suitably used for homopolymerization of vinyl chloride or copolymerization of vinyl chloride and a monomer copolymerizable with vinyl chloride.

[Dispersing agent for Suspension Polymerization]

The case where the PVA-based resin of the present invention is used as a dispersing agent for suspension polymerization will be described in detail below. The amount of the PVA-based resin of the present invention used may be appropriately adjusted according to the monomer to be subjected to suspension polymerization. For example, when used for suspension polymerization of a vinyl chloride-based monomer, the amount of the PVA-based resin of the present invention used is preferably used in, for example, an amount of 5 parts by weight or less, more preferably 0.01 to 1 part by weight, and still more preferably 0.02 to 0.2 parts by weight, with respect to 100 parts by weight of the vinyl chloride-based monomer. When the amount used is too large, the amount of the PVA-based resin that does not act as a dispersing agent tends to increase.

During suspension polymerization, for example, the polymerization is preferably carried out in the presence of an oil-soluble catalyst, by adding the PVA-based resin of the present invention to water or a heated water medium as a dispersing agent, and dispensing the vinyl chloride-based monomer.

Examples of the method of adding the PVA-based resin include a method of adding a PVA-based resin as a powder, a method of adding a PVA-based resin in the form of a solution in which a PVA-based resin is dissolved in water, an organic solvent such as alcohol, ketone, and ester, or a mixed solvent of these organic solvents and water, or a method of adding a PVA-based resin in the form of a dispersion liquid dispersed in the above solvent. As the timing of addition, the PVA-based resin may be added all at once at the initial stage of polymerization, or may be added separately in the middle of polymerization.

As other additives, a known stabilizer, for example, a polymer substance can be used in combination. Examples of the polymer substance include a PVA-based resin other than the PVA-based resin of the present invention. As such a PVA-based resin, unmodified PVA, the above modified PVA-based resin, and the like can be used.

Examples of a polymerization aid include various surfactants and inorganic dispersing agents, and the PVA-based resin of the present invention can also be used as the polymerization aid.

The polymerization catalyst may be any oil-soluble catalyst. For example, benzoyl peroxide, lauroyl peroxide, diisopropyl peroxydicarbonate, $\alpha,\alpha'$-azobisisobutyronitrile, $\alpha,\alpha'$-azobis-2,4-dimethyl-valeronitrile, acetylcyclohexylsulfonyl peroxide or a mixture thereof is used.

Examples

Hereinafter, the present invention will be described in more detail with reference to Examples, but the present invention is not limited to the following Examples as long as the gist of the present invention is not exceeded. "Part", "%", etc. are based on weight.

(Example 1)

[Production of PVA-based Resin (PVA-1) of Present Invention]

Into a polymerization can, 100 parts by weight of vinyl acetate and 100 parts by weight of methanol were charged, heating was performed while supplying an oxygen/nitrogen (volume ratio: 5:95) mixed gas to the liquid phase at 120 mL/min, and at the boiling point, 0.4 wt% of azobisisobutyronitrile (AIBN) with respect to vinyl acetate was charged into the polymerization can to initiate polymerization. After a reaction time of about 7 hours, the polymerization was stopped when the polymerization rate reached 73.2 wt%. Then, the unpolymerized vinyl acetate was removed and saponified by a well-known method to obtain a PVA-based resin (polymerization degree: 590, degree of saponification: 71.8 mol%).

<Measurement of Block Character>

The value of the block character ($A_1$) of the PVA-based resin (PVA-1) was measured by the above method. The results are shown in Table 1.

<Measurement of Ultraviolet Absorption Spectrum>

A 0.1% aqueous solution of the PVA-based resin (PVA-1) was prepared. The absorbance ($B_1$) of the 0.1% aqueous solution of the PVA-based resin at 320 nm was measured using an ultraviolet-visible near-infrared spectrophotometer ("V-560" (trade name) manufactured by JASCO Corporation). A sample container (cell) with a thickness of 1 cm was used. The results are shown in Table 1. Further, the ratio ($Bi/Ai$) of the absorbance ($B_1$) at 320 nm in the ultraviolet absorption spectrum in the case of making the polyvinyl alcohol-based resin into a 0.1 wt% aqueous solution with respect to the block character ($Ai$) was calculated. The results are shown in Table 1.

<Measurement of Yellow Index (YI Value)>

A 0.1% aqueous solution of the PVA-based resin (PVA-1) was prepared. The YI value of such an aqueous solution was measured using a colorimeter "CM-3600A" (trade name) manufactured by Konica Minolta, Inc. The results are shown in Table 1.

(Example 2)

[Production of PVA-based Resin (PVA-2) of Present Invention]

Into a polymerization can, 100 parts by weight of vinyl acetate, 2.0 parts by weight of acetaldehyde, and 4.9 parts by weight of methanol were charged, heating was performed while supplying an oxygen/nitrogen (volume ratio: 5:95) mixed gas to the liquid phase at 120 mL/min, and at the boiling point, 0.01 wt% of azobisisobutyronitrile (AIBN) with respect to vinyl acetate was charged into the polymerization can to initiate polymerization. After a reaction time about 11.5 hours, the polymerization was stopped when the polymerization rate reached 61.9 wt%. Then, the unpolymerized vinyl acetate was removed and saponified by a well-known method to obtain a PVA-based resin (polymerization degree: 760, degree of saponification: 75.8 mol%). The block character ($A_2$), the ultraviolet absorption spectrum ($B_2$) at 320 nm, and the YI value of the obtained PVA-based resin (PVA-2) were measured in the same manner as in Example 1. The results are shown in Table 1.

(Comparative Example 1)

[Production of PVA-based Resin (PVA-3)]

Into a polymerization can, 100 parts of vinyl acetate, 1.6 parts of acetaldehyde, 4.7 parts of methanol, and 0.0092% of acetyl peroxide (APO) with respect to vinyl acetate were charged, and substitution with nitrogen was performed. Thereafter, the polymerization was initiated by heating at a boiling point, and the polymerization was stopped when the polymerization rate reached 80.0% after a reaction time of about 7 hours. Then, the unpolymerized vinyl acetate was removed, and the obtained polymer was saponified with sodium hydroxide by a well-known method. Sodium acetate was added to the saponified slurry of the PVA-based resin having a resin content of 12% (polymerization degree: 630, degree of saponification: 71.7 mol%) such that the amount of sodium acetate after shaking off was 1 wt% with respect to the PVA-based resin, and shaking off was performed. Next, a 20% methanol solution of magnesium acetate tetrahydrate as a metal compound was added to the PVA-based resin prepared above such that magnesium acetate was 2 wt% with respect to the PVA-based resin. Thereafter, the above product was dried to obtain a PVA-based resin containing 2 wt% of magnesium acetate and 1 wt% of sodium acetate. Further, the obtained resin was subjected to a heat treatment at 140°C to obtain a PVA-based resin (PVA-3). The block character ($A_3$), the ultraviolet absorption spectrum ($B_3$) at 320 nm, and the YI value of the obtained PVA-based resin (PVA-3) were measured in the same manner as in Example 1. The results are shown in Table 1.

(Comparative Example 2)

[Production of PVA-based Resin (PVA-4)]

A PVA-based resin (PVA-4) was obtained in the same manner as in Comparative Example 1 except that the heat treatment was performed at 110°C. The block character ($A_4$), the ultraviolet absorption spectrum ($B_4$) at 320 nm, and the YI value of the obtained PVA-based resin (PVA-4) were measured in the same manner as in Example 1. The results are shown in Table 1.

(Comparative Example 3)

[Production of PVA-based Resin (PVA-5)]

Into a polymerization can, 100 parts of vinyl acetate, 1.6 parts of acetaldehyde, 4.7 parts of methanol, and 0.0092% of acetyl peroxide (APO) with respect to vinyl acetate were charged, and substitution with nitrogen was performed. Thereafter, the polymerization was initiated by heating at a boiling point, and the polymerization was stopped when the polymerization rate reached 80.0% after a reaction time of about 7 hours. Then, the unpolymerized vinyl acetate was removed, and the obtained polymer was saponified with sodium hydroxide by a well-known method. Sodium acetate was added to the saponified slurry of the PVA-based resin having a resin content of 12% (polymerization degree: 630, degree of saponification: 71.7 mol%) such that the amount of sodium acetate after shaking off was 1 wt% with respect to the PVA-based resin, and shaking off was performed. Next, a 20% methanol solution of magnesium acetate tetrahydrate as a metal compound was added to the PVA-based resin prepared above such that magnesium acetate was 2 wt% with respect to the PVA-based resin. Thereafter, the above product was dried to obtain a PVA-based resin (PVA-5) containing 2 wt% of magnesium acetate and 1 wt% of sodium acetate. The block character ($A_5$), the ultraviolet absorption spectrum ($B_5$) at 320 nm, and the YI value of the obtained PVA-based resin (PVA-5) were measured in the same manner as in Example 1. The results are shown in Table 1.

[Table 1]

| | PVA-based resin | Degree of saponification (mol%) | Block character (A) | Absorbance (B) at 320 nm in ultraviolet absorption spectrum | (B/A) | YI value |
|---|---|---|---|---|---|---|
| Example 1 | PVA-1 | 71.8 | 0.37 | 0.31 | 0.84 | 1.81 |
| Example 2 | PVA-2 | 71.8 | 0.37 | 0.45 | 1.21 | 1.89 |
| Comparative Example 1 | PVA-3 | 72.4 | 0.53 | 0.40 | 0.75 | 4.24 |
| Comparative Example 2 | PVA-4 | 72.4 | 0.41 | 0.11 | 0.27 | 1.54 |
| Comparative Example 3 | PVA-5 | 72.4 | 0.39 | 0.08 | 0.21 | 1.52 |

From the results in Table 1, the PVA-based resins of Examples 1 and 2 can achieve both a large amount of the double bond and a small value of the block character as compared with the PVA-based resins of Comparative Examples 1 to 3. In addition, the PVA-based resins of Examples 1 and 2 have a YI value lower than that of the PVA-based resin of Comparative Example 1, which have a relatively similar amount of the double bond. Thus, in Examples 1 and 2, a PVA-based resin having excellent polymerization stability, dispersibility and yellowing prevention during polymerization is obtained.

Although the present invention has been described in detail with reference to specific embodiments, it will be apparent to those skilled in the art that various changes and modifications can be made without departing from the spirit and scope of the present invention. The present application is based on the Japanese Patent Application (Japanese Patent Application No. 2020-005372) filed on January 16, 2020, the contents of which are incorporated herein by reference.

INDUSTRIAL APPLICABILITY

Since the PVA-based resin of the present invention has a large amount of the double bond, and when used as a dispersing agent for suspension polymerization, the suspension polymerization stability is excellent, and when used as various dispersing agents, the polymerization stability during polymerization is excellent. In addition, since the value of the block character is small, the PVA-based resin of the present invention has high surface activity and excellent dispersibility when used as various dispersing agents. The PVA-based resin of the present invention is particularly useful as a dispersing agent for suspension polymerization of vinyl chloride-based monomers.

**Claims**

1. A polyvinyl alcohol-based resin, wherein a block character (A) is less than 0.4, and an absorbance (B) at 320 nm in an ultraviolet absorption spectrum in the case of making the polyvinyl alcohol-based resin into a 0.1 wt% aqueous solution is 0.2 or more.

2. The polyvinyl alcohol-based resin according to claim 1, wherein a ratio (B/A) of the absorbance (B) at 320 nm in the ultraviolet absorption spectrum in the case of making the polyvinyl alcohol-based resin into a 0.1 wt% aqueous solution with respect to the block character (A) is 0.6 or more.

3. A dispersing agent comprising:
the polyvinyl alcohol-based resin according to claim 1 or 2.

4. A dispersing agent for suspension polymerization comprising:
the polyvinyl alcohol-based resin according to claim 1 or 2.

5. A method for producing the polyvinyl alcohol-based resin according to claim 1 or 2, comprising:
polymerizing a monomer composition containing a vinyl ester-based monomer while introducing an oxygen-containing gas to obtain a vinyl ester-based polymer.

<table>
<tr><td colspan="2" align="center">**INTERNATIONAL SEARCH REPORT**</td><td>International application No.<br><br>PCT/JP2021/001120</td></tr>
</table>

| A. CLASSIFICATION OF SUBJECT MATTER |
|---|
| B01F 17/52(2006.01)i; C08F 16/06(2006.01)i; C08F 2/20(2006.01)i<br>FI: C08F16/06; C08F2/20; B01F17/52<br>According to International Patent Classification (IPC) or to both national classification and IPC |

| B. FIELDS SEARCHED |
|---|
| Minimum documentation searched (classification system followed by classification symbols)<br>B01F17/52; C08F16/06; C08F2/20 |

| Documentation searched other than minimum documentation to the extent that such documents are included in the fields searched |
|---|
| Published examined utility model applications of Japan      1922-1996<br>Published unexamined utility model applications of Japan      1971-2021<br>Registered utility model specifications of Japan      1996-2021<br>Published registered utility model applications of Japan      1994-2021 |

| Electronic data base consulted during the international search (name of data base and, where practicable, search terms used) |
|---|
|  |

| C. DOCUMENTS CONSIDERED TO BE RELEVANT | | |
|---|---|---|
| Category* | Citation of document, with indication, where appropriate, of the relevant passages | Relevant to claim No. |
| Y | JP 8-208724 A (SHIN-ETSU CHEMICAL CO., LTD.) 13 August 1996 (1996-08-13) claim 1, paragraphs [0005], [0026], [0027], [0040]-[0054], examples | 1-5 |
| Y | WO 2018/096937 A1 (DENKA COMPANY LIMITED) 31 May 2018 (2018-05-31) claims 1-8, paragraphs [0007], [0038], [0046], [0068], [0069], example 1 | 1-5 |
| A | WO 2015/182567 A1 (JAPAN VAM & POVAL CO., LTD.) 03 December 2015 (2015-12-03) entire text | 1-5 |
| A | WO 2018/117246 A1 (THE NIPPON SYNTHETIC CHEMICAL INDUSTRY CO., LTD.) 28 June 2018 (2018-06-28) entire text | 1-5 |
| A | JP 2018-507311 A (SEKISUI SPECIALTY CHEMICALS AMERICA, LLC) 15 March 2018 (2018-03-15) entire text | 1-5 |

| ☐ Further documents are listed in the continuation of Box C. | ☒ See patent family annex. |
|---|---|

| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
|---|---|

| Date of the actual completion of the international search<br>    26 February 2021 (26.02.2021) | Date of mailing of the international search report<br>    16 March 2021 (16.03.2021) |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

**INTERNATIONAL SEARCH REPORT**
Information on patent family members

| International application No. |
| --- |
| PCT/JP2021/001120 |

| Patent Documents referred in the Report | Publication Date | Patent Family | Publication Date |
| --- | --- | --- | --- |
| JP 8-208724 A | 13 Aug. 1996 | (Family: none) | |
| WO 2018/096937 A1 | 31 May 2018 | TW 201829479 A | |
| WO 2015/182567 A1 | 03 Dec. 2015 | US 2017/0198068 A1 entire text EP 3150639 A1 CN 106414511 A TW 201602137 A | |
| WO 2018/117246 A1 | 28 Jun. 2018 | CN 110088147 A TW 201835119 A | |
| JP 2018-507311 A | 15 Mar. 2018 | US 2018/0044451 A1 entire text WO 2016/141256 A1 EP 3265505 A1 TW 201700157 A CN 107548404 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H08269112 A
- JP H08283313 A
- JP 2004250695 A
- JP 2020005372 A

**Non-patent literature cited in the description**

- Poval. Polymer Publications, 1984
- *Macromolecules,* 1977, vol. 10, 532